# EUROPEAN PATENT SPECIFICATION

(11) **EP 3 395 565 B1**
(45) Date of publication and mention of the grant of the patent: **31.07.2019**
(21) Application number: 16878812.3
(22) Date of filing: 21.12.2016
(51) Int. Cl.: B32B 27/00, B05D 1/36, B05D 3/10, B05D 7/24, C09D 5/00, C09D 171/02, C08G 65/336, C09D 7/40

(54) **METHOD FOR PRODUCING COMPLEX, AND COMPLEX**
VERFAHREN ZUR HERSTELLUNG EINES KOMPLEXES UND KOMPLEX
PROCÉDÉ POUR PRODUIRE UN COMPLEXE, ET COMPLEXE

(30) Priority: 22.12.2015 JP 2015250385
(43) Date of publication of application: 31.10.2018
(73) Proprietor: Kaneka Corporation, Osaka-shi, Osaka 530-8288 (JP)
(72) Inventor: OGAWA, Akira, Takasago-shi Hyogo 676-8688 (JP); YANO, Ayako, Takasago-shi Hyogo 676-8688 (JP)
(74) Representative: Vossius & Partner Patentanwälte Rechtsanwälte mbB
(86) International application number: PCT/JP2016/088212
(87) International publication number: WO 2017/110925

(56) References cited:
- EP-A1- 1 167 451
- EP-A1- 2 698 481
- WO-A1-2012/141281
- JP-A- 2000 129 145
- JP-A- 2001 048 979
- JP-A- 2002 356 613
- JP-A- 2011 153 249
- JP-A- 2011 153 249
- JP-A- 2014 227 427

## Description

### TECHNICAL FIELD

The present invention relates to a method for producing a complex composed of a substrate, a cured product of a curable composition which contains a polymer having a hydrolyzable silyl group, and a coating film of a heat-curable coating material, and also a complex that can be produced by the production method.

### BACKGROUND ART

A polymer having a hydrolyzable silyl group is known as a moisture-reactive polymer, and being contained in many industrial products like adhesive, sealing material, coating substance, coating material, and cohesive agent, it is used in a wide range of applications.

As a hydrolyzable silyl group type, a methyldimethoxysilyl group or a trimethoxysilyl group has been mainly used. That is because an organic polymer having a methyldimethoxysilyl group exhibits a desirable behavior that, under a circumstance in which a curing catalyst is not present, it has no reaction of a silyl group and is stable over a long period of time even if moisture coexists, and when mixed with a curing catalyst, the curing reaction starts to progress at the time of mixing. Further, as the trimethoxysilyl group is a functional group which has higher activity than methyldimethoxysilyl group, it is suitable for an application in which rapid curing is required.

For an industrial application however, there is a case in which, after adhering a substrate with an adhesive or coating a sealing material for filling gaps in a substrate, a heat-curable coating material is coated either immediately thereafter or after curing, and the substrate is heated (Prior Art Documents 1 and 2). In that case, the curable composition which contains a polymer having a hydrolyzable silyl group, in which the hydrolyzable group is a methoxy group, may yield an occurrence of swelling as foams are generated inside a cured product upon heating.

Meanwhile, as a hydrolyzable silyl group, a triethoxysilyl group or a methyldiethoxysilyl group is also used (Patent Documents 3 to 7). However, as the activity is lower than the case of methoxy group, curing is slow when it is prepared as a curable composition, and use thereof has been limited.

Patent Document JP2011153249 discloses a curable composition for cured material comprising organic polymer containing a reactive silicon group.
Patent Document 1: Japanese Unexamined Patent Application, Publication No. 2013-253131
Patent Document 2: Japanese Unexamined Patent Application, Publication No. 2006-008934
Patent Document 3: Japanese Unexamined Patent Application, Publication No. 2011-153309
Patent Document 4: Japanese Unexamined Patent Application, Publication No. 2011-219608
Patent Document 5: Japanese Unexamined Patent Application, Publication No. 2012-229398
Patent Document 6: PCT International Publication No. WO2013/042702
Patent Document 7: Japanese Unexamined Patent Application (Translation of PCT Application), Publication No. 2014-517084

### DISCLOSURE OF THE INVENTION

### Problems to be Solved by the Invention

The present invention relates to a method for producing a complex that includes coating a substrate with a curable composition which contains a polymer having a hydrolyzable silyl group, and subsequently coating a heat-curable coating material on top of the curable composition, and an object thereof is to provide a method for producing a complex which hardly causes swelling of a cured product even after heating, and a complex that can be produced by the production method.

### Means for Solving the Problems

As a result of conducting intensive studies to solve the problems described above, the inventors of the present invention completed the following inventions.

Namely, the present invention relates to the followings;
(1). A method for producing a complex of a substrate, a cured product of a curable composition, and a coating film of a heat-curable coating material, the method including:
   coating a substrate with a curable composition, and thereafter coating with a heat-curable coating material, and then carrying out heating,
   in which the curable composition contains a polyoxyalkylene polymer (A) having a hydrolyzable silyl group, and
   the hydrolyzable silyl group is represented by the following general formula (1):

      -SiRₐ(OR¹)₃₋ₐ (1)

      (each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2),
(2). The method for producing a complex described in (1), in which temperature for the heating is 140 to 250°C,
(3). The method for producing a complex described in (2), in which temperature for the heating is 150 to 250°C,
(4). The method for producing a complex described in any one of (1) to (3), in which the heating is carried out after coating the substrate with the curable composition but before the curable composition is cured,
(5). The method for producing a complex described in any one of (1) to (4), in which the R¹ is an ethyl group,
(6). The method for producing a complex described in any one of (1) to (5), in which the a is 0,
(7). The method for producing a complex described in any one of (1) to (6), in which the curable composition further contains a silane coupling agent in which the hydrolyzable group is a methoxy group, and content of the silane coupling agent is 2 parts by weight or less relative to 100 parts by weight of the polyoxyalkylene polymer (A) having a hydrolyzable silyl group,
(8). The method for producing a complex described in any one of (1) to (6), in which the hydrolyzable silyl group of a compound having a hydrolyzable silyl group that is contained in the curable composition is only the hydrolyzable silyl group represented by the general formula (1),
(9). The method for producing a complex described in any one of (1) to (8), in which number of the silyl group contained in one molecule of the polyoxyalkylene polymer (A) having a hydrolyzable silyl group is 1.8 to 3.0, and
(10). A complex of a substrate, a cured product of a curable composition, and a coating film of a heat-curable coating material,
   in which the curable composition contains a polyoxyalkylene polymer (A) having a hydrolyzable silyl group, and the hydrolyzable silyl group is represented by the following general formula (1):

   -SiRₐ(OR¹)₃₋ₐ (1)

   (each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2).

### Effects of the Invention

According to the present invention, a method for producing a complex that includes coating a substrate with a curable composition which contains a polymer having a hydrolyzable silyl group, and subsequently, coating a heat-curable coating material on top of the curable composition, in which the complex hardly causes swelling of a cured product even after heating, and a complex that can be produced by the production method can be provided.

### PREFERRED MODE FOR CARRYING OUT THE INVENTION

The present invention relates to a method for producing a complex of a substrate, a cured product of a curable composition, and a coating film of a heat-curable coating material. The production method includes coating a substrate with a curable composition, and thereafter coating with a heat-curable coating material, and then carrying out heating. The curable composition used for the production of a complex contains a polyoxyalkylene polymer (A) having a hydrolyzable silyl group. The hydrolyzable silyl group is represented by the following general formula (1):

-SiRₐ(OR¹)₃₋ₐ (1)

(each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2).

### <<Polyoxyalkylene polymer (A) having hydrolyzable silyl group>>

The curable composition used for the production of a complex contains a polyoxyalkylene polymer (A) having a hydrolyzable silyl group that is represented by the following general formula (1):

-SiRₐ(OR¹)₃₋ₐ (1)

(Each R independently represents a hydrocarbon group having 1 to 10 carbon atoms that may have a substituent group formed of a heteroatom-containing group or a halogen atom. Each R¹ independently represents a hydrocarbon group having 2 to 10 carbon atoms. a is 0, 1 or 2).

By having a hydrocarbon group having 2 to 10 carbon atoms as R¹ of the general formula (1), methanol with low molecular weight which is easily vaporized upon heating is not generated, and thus swelling or wrinkle hardly occurs on a surface of a cured product. Hereinbelow, the polyoxyalkylene polymer (A) having a hydrolyzable silyl group is also described as the component (A).

### <Hydrolyzable silyl group>

The polyoxyalkylene polymer (A) has a hydrolyzable silyl group that is represented by the following general formula (1) :

-SiRₐ(OR¹)₃₋ₐ (1)

(Each R independently represents a hydrocarbon group having 1 to 10 carbon atoms that may have a substituent group formed of a heteroatom-containing group or a halogen atom. Each R¹ independently represents a hydrocarbon group having 2 to 10 carbon atoms. a is 0, 1 or 2).

Each R independently is a hydrocarbon group having 1 to 10 carbon atoms that may have a substituent group formed of a heteroatom-containing group or a halogen atom. Specific examples of R include alkyl groups such as a methyl group or an ethyl group; cycloalkyl groups such as a cyclohexyl group; aryl groups such as a phenyl group; aralkyl groups such as a benzyl group; halogenated methyl groups such as a chloromethyl group; and alkoxymethyl groups such as a methoxymethyl group. R is preferably a methyl group, an ethyl group, a chloromethyl group, or a methoxymethyl group, more preferably a methyl group, a chloromethyl group, or a methoxymethyl group, and even more preferably a methyl group.

R¹ is a hydrocarbon group having 2 to 10 carbon atoms. Specific examples of R¹ include alkyl groups such as an ethyl group, a propyl group, an isopropyl group, a butyl group, an isobutyl group, a sec-butyl group, or a tert-butyl group; and cycloalkyl groups such as a cyclohexyl group. R¹ is preferably an ethyl group, a propyl group, or a butyl group, and more preferably an ethyl group.

a is 0, 1, or 2, but from the viewpoint of high curing activity, it is preferably 0 or 1, and more preferably 0.

Specific examples of the hydrolyzable silyl group include a triethoxysilyl group, a diethoxymethylsilyl group, a tripropoxysilyl group, a dipropoxymethylsilyl group, a (chloromethyl)diethoxysilyl group, a (chloromethyl)dipropoxysilyl group, a (methoxymethyl)diethoxysilyl group, a (methoxymethyl)dipropoxysilyl group, a (N,N-diethylaminomethyl)diethoxysilyl group, and a (N,N-diethylaminomethyl)dipropoxysilyl group, but not limited thereto. Among them, a methyldiethoxysilyl group, a triethoxysilyl group, a (chloromethyl)diethoxysilyl group, a (methoxymethyl)diethoxysilyl group, and a (N,N-diethylaminomethyl)diethoxysilyl group are preferable in that they exhibit even higher activity and allow obtainment of a cured product which has favorable mechanical and physical properties while an occurrence of swelling is suppressed. From the viewpoint of the stability and safety, a methyldiethoxysilyl group and a triethoxysilyl group are more preferable, and a triethoxysilyl group is even more preferable.

Number of the hydrolyzable silyl group contained in one molecule of the polyoxyalkylene polymer (A) having a hydrolyzable silyl group is preferably 0.5 or more, more preferably 1.2 or more, even more preferably 1.5 or more, and most preferably 1.8 or more, on average. The upper limit is preferably 4 or less, and it is more preferably 3 or less. When the polyoxyalkylene polymer (A) having a hydrolyzable silyl group has a branched chain, number of the silyl group is preferably 1.8 to 3.0.

### <Main chain structure>

Main chain structure of the polyoxyalkylene polymer (A) having a hydrolyzable silyl group may have a linear shape or a branched chain. A branched structure is preferable in that foaming can be suppressed.

Main chain of the polyoxyalkylene polymer (A) having a hydrolyzable silyl group is a polymer having a repeat unit represented by -R²-O- (in the formula, R² is a linear or branched alkylene group having 1 to 14 carbon atoms), and R² is more preferably a linear or branched alkylene group having 2 to 4 carbon atoms. Specific examples of the repeat unit represented by -R²-O- include -CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene polymer (A) may be composed of only one kind of repeat unit or two or more kinds of repeat units. Particularly, when used as a sealant, an adhesive, and the like, it is preferably composed of a polyoxypropylene polymer which has an oxypropylene repeat unit in an amount of 50% by weight or more, and preferably 80% by weight or more of the polymer main chain structure, from the viewpoint of having amorphous property and relatively low viscosity.

The polyoxyalkylene polymer (A) having a hydrolyzable silyl group may have, among the above various main chain skeletons, only one kind of the main chain skeletons or a mixture of a polymer having different main chain skeletons. Furthermore, with regard to the mixture, each polymer prepared separately can be admixed with each other, or production can be simultaneously made to have arbitrary mixing composition.

As for the number average molecular weight of the polyoxyalkylene polymer (A) having a hydrolyzable silyl group, number average molecular weight obtained by GPC measurement is used. The number average molecular weight of the polyoxyalkylene polymer (A) is, in terms of a value by GPC using polystyrene as a reference, preferably 3,000 to 100,000, more preferably 3,000 to 50,000, and particularly preferably 3,000 to 30,000. When the number average molecular weight is less than 3,000, there may be a case in which it is inappropriate in terms of production cost as the introduction amount of a reactive silicon group is high, and when it is more than 100,000, high viscosity of the curable composition is yielded, and thus there may be a case in which the operation for coating the curable composition on a substrate becomes difficult.

The molecular weight of the polyoxyalkylene polymer (A) having a hydrolyzable silyl group can be also expressed as terminal group-converted molecular weight that is obtained by titrimetric analysis of an organic polymer precursor before introduction of a hydrolyzable silyl group based on the hydroxyl value measuring method of JIS K 1557 and the iodine value measuring method specified in JIS K 0070 to directly measure the terminal group concentration with consideration of the structure of the organic polymer (i.e., branching level determined by a polymerization initiator used). The number average molecular weight of the polyoxyalkylene polymer (A) having a hydrolyzable silyl group can be also obtained by establishing a calibration curve of the number average molecular weight obtained by GPC measurement and terminal group-converted molecular weight of an organic polymer precursor, and converting the terminal group-converted molecular weight of the organic polymer precursor in terms of the number average molecular weight by GPC measurement of the polyoxyalkylene polymer (A) having a hydrolyzable silyl group.

The molecular weight distribution (Mw/Mn) of the polyoxyalkylene polymer (A) having a hydrolyzable silyl group is, although not particularly limited, preferably as narrow as possible, and it is preferably less than 2.0, more preferably 1.6 or less, even more preferably 1.5 or less, particularly preferably 1.4 or less, and most preferably 1.2 or less. The molecular weight distribution of the polyoxyalkylene polymer (A) having a hydrolyzable silyl group can be measured by the number average molecular weight obtained by GPC measurement and weight average molecular weight.

As for a method for synthesizing the polyoxyalkylene polymer (A) having a hydrolyzable silyl group, preferred are (i) method of obtaining a hydroxyl group-terminal polyoxyalkylene polymer according to a process of polymerizing an epoxy compound with an initiator having a hydroxyl group by using a composite metal cyanide complex catalyst like zinc hexacyanocobaltate glyme complex, thereafter converting the hydroxyl group of obtained hydroxyl group-terminal polyoxyalkylene polymer to a carbon-carbon unsaturated group, and then adding a silane compound according to a hydrosilylation, (ii) method of obtaining a hydroxyl group-terminal polyoxyalkylene polymer according to a process of polymerizing an epoxy compound with an initiator having a hydroxyl group by using a composite metal cyanide complex catalyst like zinc hexacyanocobaltate glyme complex, and then reacting the obtained hydroxyl group-terminal polyoxyalkylene polymer with a compound having both a group reactive with hydroxyl group and a hydrolyzable silyl group, and (iii) method of reacting a hydroxyl group-terminal polyoxyalkylene polymer with an excess polyisocyanate compound to give a polymer having a terminal isocyanate group, and then reacting it with a compound having both a group reactive with an isocyanate group and a hydrolyzable silyl group. Among the above three methods, from the viewpoint of convenience of the reaction, adjustment of an introduction amount of a hydrolyzable silyl group, and having stable physical properties of a polymer containing a reactive silicon group to be obtained, the method (i) is more preferable.

Examples of the initiator having a hydroxyl group used for the methods (i) and (ii) include those having one or more hydroxyl groups such as ethylene glycol, propylene glycol, glycerin, pentaerythritol, polypropylene glycol with low molecular weight, polyoxypropylene triol, allyl alcohol, polypropylene monoallyl ether, or polypropylene monoalkyl ether.

Examples of the epoxy compound used for the methods (i) and (ii) include alkylene oxides such as ethylene oxide or propylene oxide and glycidyl ether such as methyl glycidyl ether or allyl glycidyl ether. Among them, propylene oxide is preferable.

Examples of the carbon-carbon unsaturated group used for the methods (i) and (ii) include a vinyl group, an allyl group, and a methallyl group. Among them, an allyl group is preferable.

As the method (i) for converting a hydroxyl group to a carbon-carbon unsaturated group, it is preferable to use a method in which a hydroxyl group-terminal polymer is reacted with an alkali metal salt, and thereafter reacted with a halogenated hydrocarbon compound having a carbon-carbon unsaturated bond.

Examples of the halogenated hydrocarbon compound which is used for the method (i) include vinyl chloride, allyl chloride, methallyl chloride, vinyl bromide, allyl bromide, methallyl bromide, vinyl iodide, allyl iodide, and methallyl iodide. From the viewpoint of the reactivity with a hydrosilane compound, allyl chloride and methallyl chloride are preferable.

For the method (i), triethoxysilane, diethoxymethylsilane, tripropoxysilane, dipropoxymethylsilane, (chloromethyl)diethoxysilane, (chloromethyl)dipropoxysilane, (methoxymethyl)diethoxysilane, (methoxymethyl)dipropoxysilane, (N,N-diethylaminomethyl)diethoxysilane, and (N,N-diethylaminomethyl)dipropoxysilane can be used as a hydrosilane compound.

The hydrosilylation reaction that is used for the method (i) is accelerated by various catalysts. As the hydrosilylation catalyst, known catalysts such as various complexes of cobalt, nickel, iridium, platinum, palladium, rhodium, ruthenium, and the like can be used. For example, platinum supported on carriers such as alumina, silica, carbon black, and the like, chloroplatinic acid; chloroplatinic acid complexes composed of chloroplatinic acid, alcohol, aldehyde, ketone etc.; platinum-olefin complexes [for example, Pt (CH₂=CH₂)₂(PPh₃), Pt(CH₂=CH₂)₂Cl₂]; platinum-vinylsiloxane complexes [Pt{ (vinyl)Me₂SiOSiMe₂(vinyl)}, Pt{Me(vinyl)SiO}₄]; platinum-phosphine complexes [Ph(PPh₃)₄, Pt(PBu₃)₄]; platinum-phosphite complexes [Pt{P(OPh)₃}₄], and the like can be used.

For the method (ii), as a compound having both a group reactive with hydroxyl group and a hydrolyzable silyl group, isocyanate silanes such as 3-isocyanatopropyltriethoxysilane or isocyanatomethyltriethoxysilane; mercaptosilanes such as 3-mercaptopropyltriethoxysilane; and epoxysilanes such as 3-glycidoxypropyltriethoxysilane, and the like can be used.

For the method (iii), as a polyisocyanate compound, aromatic polyisocyanate such as toluene (tolylene) diisocyanate, diphenylmethane diisocyanate, or xylylene diisocyanate, and the like; and aliphatic polyisocyanate such as isophorone diisocyanate, or hexamethylene diisocyanate, and the like can be used.

Examples of a compound having both a group reactive with an isocyanate group and a hydrolyzable silyl group, which can be used for the method (iii), include amino group-containing silanes such as γ-aminopropyltriethoxysilane, N-(β-aminoethyl)-γ-aminopropyltriethoxysilane, γ-(N-phenyl)aminopropyltriethoxysilane, N-ethylaminoisobutyltriethoxysilane, N-cyclohexylaminomethyltriethoxysilane, or N-cyclohexylaminomethyldiethoxymethylsilane; hydroxyl group-containing silanes such as γ-hydroxypropyltriethoxysilane; and mercapto group-containing silanes such as γ-mercaptopropyltriethoxysilane, and the like.

### <<Other additives>>

The curable composition may be added with, other than the polyoxyalkylene polymer (A) having a hydrolyzable silyl group, a polymer other than the polyoxyalkylene polymer having a hydrolyzable silyl group, a silanol condensation catalyst, a filler, an adhesiveness imparting agent, a plasticizing agent, a solvent, a diluent, an antisagging agent, an antioxidant, a photostabilizer, an ultraviolet absorbing agent, a physical property modifier, a tackiness imparting resin, an epoxy group-containing compound, a photocurable substance, an oxygen curable substance, a surface modifying agent, an epoxy resin, other resin, or a flame retardant as additives. Furthermore, the curable composition may be added with various additives as necessary for the purpose of adjusting general physical properties of a curable composition or a cured product. Examples of such additive include a curability adjusting agent, a radical inhibitor, a metal inactivating agent, an ozone-degradation inhibitor, a phosphorus peroxide decomposer, a lubricant, a pigment, and an anti-mold agent, and the like.

From the viewpoint of suppressing swelling of a cured product of the curable composition in complex, it is preferable that a foaming agent is substantially not added in the curable composition. Content of the foaming agent is preferably less than 1 part by weight relative to 100 parts by weight of the component (A). Furthermore, as the aforementioned component (A) is contained in the curable composition, it is easy to suppress the swelling of a cured product of the curable composition in complex even when a polymer with high heat resistance is not added to the curable composition. Due to such reasons, it is acceptable that an epoxy resin or a tackiness imparting resin with high heat resistance is either added in a small amount or not added in the curable composition. Addition amount of the epoxy resin or a tackiness imparting agent with high heat resistance is preferably less than 1 part by weight relative to 100 parts by weight of the component (A), and it is more preferable that they are substantially not added.

In a case in which a compound having a hydrolyzable silyl group is added as an additive, it is preferable that the hydrolyzable silyl group is only a hydrolyzable silyl group represented by the following general formula (1):

-SiRₐ(OR¹)₃₋ₐ (1)

(each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms , and a is 0, 1 or 2),
since methanol as a cause of swelling upon curing is not generated.

### <Polymer other than polyoxyalkylene polymer having hydrolyzable silyl group>

It is also possible that the curable composition contains a polymer other than the polyoxyalkylene polymer having a hydrolyzable silyl group that is represented by the following general formula (2):

-SiR³_{b}(OR⁴)_{3-b} (2)

(Each R³ independently represents a hydrocarbon group having 1 to 10 carbon atoms that may have a substituent group formed of a heteroatom-containing group or a halogen atom. Each R⁴ independently represents a hydrocarbon group having 1 to 10 carbon atoms. b is 0, 1 or 2).

The main chain skeleton of the polymer other than polyoxyalkylene polymer is not particularly limited as long as it is a skeleton other than the polyoxyalkylene polymer, and those having various main chain skeletons can be used.

Specific examples thereof include hydrocarbon polymers such as ethylene-propylene-based copolymer, polyisobutylene, copolymer of isobutylene and isoprene, polychloroprene, polyisoprene, copolymer of isoprene or butadiene and acrylonitrile and/or styrene, and the like, polybutadiene, copolymer of isoprene or butadiene and acrylonitrile and styrene, and the like, hydrogenated polyolefin polymer obtained by hydrogenation of these polyolefin polymer, and the like; polyester polymers obtained by condensation of dibasic acids such as adipic acid and glycol or ring opening polymerization of lactones; acrylate polymers obtained by radical polymerization of monomers such as methyl (meth)acrylate, ethyl (meth)acrylate, butyl (meth)acrylate, and the like; vinyl polymer obtained by radical polymerization of monomers such as vinyl acetate, acrylonitrile, styrene, and the like; polysulfide polymers; polyamide polymers such as nylon 6 obtained by ring opening polymerization of ε-caprolactam, nylon 6·6 obtained by polycondensation of hexamethylenediamine and adipic acid, nylon 6-10 obtained by polycondensation of hexamethylenediamine and sebacic acid, nylon 11 obtained by polycondensation of ε-aminoundecanoic acid, nylon 12 obtained by ring opening polymerization of ε-aminolaurolactam, copolymerized nylon having not less than 2 components from the above-mentioned nylons; polycarbonate polymers produced by polycondensation of, for example, bisphenol A and carbonyl chloride, diallyl phthalate polymers, and the like. Furthermore, regarding the above description form, (meth)acrylic acid is to indicate acrylic acid and/or methacrylic acid.

Use amount of the polymer other than polyoxyalkylene polymer is preferably 1 to 500 parts by weight, and more preferably 10 to 200 parts by weight relative to 100 parts by weight of the polymer (A) having a hydrolyzable silyl group.

### <Silanol condensation catalyst>

The curable composition may be blended with a silanol condensation catalyst for the purpose of accelerating the reaction of hydrolyzing and condensing the hydrolyzable silyl group of the polyoxyalkylene polymer (A) having a hydrolyzable silyl group, and extending a chain or crosslinking of the polymer.

It is already known that many catalysts can be used as silanol condensation catalysts and, for example, an organotin compound, a metal carboxylate, an amine compound, a carboxylic acid, an alkoxy metal, an inorganic acid, and the like can be mentioned.

Specific examples of the organotin compound include dibutyl tin dilaurate, dibutyl tin maleate, dibutyl tin phthalate, dibutyl tin dioctanoate, dibutyl tin bis(2-ethylhexanoate), dibutyl tin bis(methylmaleate), dibutyl tin bis(ethylmaleate), dibutyl tin bis(butylmaleate), dibutyl tin bis(octylmaleate), dibutyl tin bis(tridecylmaleate), dibutyl tin bis(benzylmaleate), dibutyl tin diacetate, dioctyl tin bis(ethylmaleate), dioctyl tin bis(octylmaleate), dibutyl tin dimethoxide, dibutyl tin bis(nonylphenoxide), dibutenyl tin oxide, dibutyl tin oxide, dibutyl tin bis(acetylacetonate), dioctyl tin bis(acetylacetonate), dibutyl tin bis(ethylacetoacetonate), a reaction product of dibutyl tin oxide and silicate compound, a reaction product of dioctyl tin oxide and silicate compound, and a reaction product of dibutyl tin oxide and phthalic acid ester, and the like.

Specific examples of the metal carboxylate include tin carboxylate, lead carboxylate, bismuth carboxylate, potassium carboxylate, calcium carboxylate, barium carboxylate, titanium, carboxylate, zirconium carboxylate, hafnium carboxylate, vanadium carboxylate, manganese carboxylate, iron carboxylate, cobalt carboxylate, nickel carboxylate, cerium carboxylate, and the like. As a carboxylic acid group, the following carboxylic acid and various metals can be combined. As the kind of the metal, divalent tin, bismuth, divalent iron, trivalent iron, zirconium and titanium are preferable since they have high activity, and divalent tin is most preferable.

Specific examples of the amine compound include aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, cyclohexylamine, and the like; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine, butylstearylamine, and the like; aliphatic tertiary amines such as triamylamine, trihexylamine, trioctylamine, and the like; aliphatic unsaturated amines such as triallylamine, oleylamine, and the like; aromatic amines such as aniline, laurylaniline, stearylaniline, triphenylamine, and the like; nitrogen-containing heterocyclic compounds such as pyridine, 2-aminopyridine, 2-(dimethylamino)pyridine, 4-(dimethylaminopyridine), 2-hydroxypyridine, imidazole, 2-ethyl-4-methylimidazole, morpholine, N-methylmorpholine, piperidine, 2-piperidinemethanol, 2-(2-piperidino)ethanol, piperidone, 1,2-dimethyl-1,4,5,6-tetrahydropyrimidine, 1,8-diazabicyclo[5,4,0]undecene-7 (DBU), 6-(dibutylamino)-1,8-diazabicyclo[5,4,0]undecene-7 (DBA-DBU), 6-(2-hydroxypropyl)-1,8-diazabicyclo[5,4,0]undeca-7-ene (OH-DBU), compounds wherein hydroxyl group of OH-DBU is modified by urethanation etc., 1,5-diazabicyclo[4,3,0]nonene-5 (DBN), 1,4-diazabicyclo[2,2,2]octane (DABCO), aziridine, and the like; salts derived from nitrogen-containing heterocyclic compounds such as phenol salts of DBU (for example, product name: U-CAT SA1 (manufactured by San-Apro Ltd.)), octylates of DBU (for example, product name: U-CAT SA102 (manufactured by San-Apro Ltd.)), p-toluenesulfonates of DBU (for example, product name: U-CAT SA506 (manufactured by San-Apro Ltd.)), octylates of DBN (for example, product name: U-CAT 1102 (manufactured by San-Apro Ltd.), and the like; and other amines such as amines (for example, monoethanolamine, diethanolamine, triethanolamine, 3-hydroxypropylamine, ethylenediamine, propylenediamine, hexamethylenediamine, N-methyl-1,3-propanediamine, N,N'-dimethyl-1,3-propanediamine, diethylenetriamine, triethylenetetramine, 2-(2-aminoethylamino)ethanol, benzylamine, 3-methoxypropylamine, 3-lauryloxypropylamine, 3-dimethylaminopropylamine, 3-diethylaminopropylamine, 3-dibutylaminopropylamine, 3-morpholinopropylamine, 2-(1-piperazinyl)ethylamine, xylylenediamine, 2,4,6-tris(dimethylaminomethyl)phenol, and the like), guanidines, for example, guanidine, phenylguanidine, diphenylguanidine, and the like; biguanides, for example, butylbiguanide, 1-o-tolylbiguanide, 1-phenylbiguanide, and the like.

Of these, preferred are amidines such as 1,2-dimethyl-1,4,5,6-tetrahydropyrimidine, DBU, DBA-DBU, DBN, and the like; guanidines such as guanidine, phenylguanidine, diphenylguanidine, and the like; biguanides such as butylbiguanide, 1-o-tolylbiguanide, 1-phenylbiguanide, and the like since they exhibit high activity, and aryl group-substituted biguanides such as 1-o-tolylbiguanide, 1-phenylbiguanide, and the like are preferable since they are expected to show high adhesiveness.

As an amine compound to be used as a silanol condensation catalyst, an amino group-containing silane coupling agent (also described as "aminosilane") and a ketimine compound which produces the aforementioned amine compound by hydrolysis can also be used.

Specific examples of the carboxylic acid include acetic acid, propionic acid, butyric acid, 2-ethylhexanoic acid, lauric acid, stearic acid, oleic acid, linoleic acid, pivalic acid, 2,2-dimethylbutyric acid, 2,2-diethylbutyric acid, 2,2-dimethylhexanoic acid, 2,2-diethylhexanoic acid, 2,2-dimethyloctanoic acid, 2-ethyl-2,5-dimethylhexanoic acid, neodecanoic acid, versatic acid, and the like. 2-Ethylhexanoic acid, neodecanoic acid and versatic acid are preferable from the viewpoint of high activity and availability. Furthermore, derivatives of the above-mentioned carboxylic acid, such as carboxylic acid anhydride, alkyl carboxylate, amide, nitrile, halogenated acyl, and the like can also be used.

Specific examples of the alkoxy metal include titanium compounds such as tetrabutyl titanate, tetrapropyl titanate, titanium tetrakis(acetylacetonate), bis(acetylacetonate)diisopropoxy titanium, diisopropoxy titanium bis(ethylacetoacetate), and the like, aluminum compounds such as aluminum tris(acetylacetonate), aluminum tris(ethylacetoacetate), diisopropoxy aluminum ethylacetoacetate, and the like, zirconium compounds such as zirconium tetrakis(acetylacetonate), and the like, and hafnium compounds such as tetrabutoxy hafnium, and the like.

Examples of other silanol condensation catalyst include organic sulfonic acids such as trifluoromethane sulfonic acid, and the like; inorganic acids such as hydrochloric acid, phosphoric acid, boronic acid, and the like; boron trifluoride complexes such as boron trifluoride, boron trifluoride diethyl ether complex, boron trifluoride monoethylamine complex, and the like; and fluorine anion-containing compounds such as ammonium fluoride, tetrabutylammonium fluoride, potassium fluoride, cesium, fluoride, fluoride hydrogen ammonium, 1,1,2,3,3,3-hexafluoro-1-diethylaminopropane (MEC81, common name, Ishikawa reagent), potassium hexafluorophosphate, Na₂SiF₆, K₂SiF₆, (NH₄)₂SiF₆, and the like.

Photoacid generators and photobase generators that generate acid or base by light can also be used as silanol condensation catalysts. Examples of the photoacid generator include onium salt photoacid generators, for example, triarylsulfonium salts such as p-phenylbenzylmethylsulfonium salt, p-hydroxyphenylbenzylmethylsulfonium salt, triphenylsulfonium salt, diphenyl[4-(phenphenylthio)phenyl]sulfonium salt, and the like, 4,4-bis[di(β-hydroxyethoxy)phenylsulfonio]phenyl sulfide bishexafluoroantimonate, iodonium salts such as diphenyliodonium salt, bis(4-tert-butylphenyl)iodonium salt, (4-tert-butoxyphenyl)phenyliodonium salt, (4-methoxyphenyl)phenyl iodonium salt, and the like, sulfonic acid derivatives such as benzoin tosylate, pyrogallol trimesylate, nitrobenzyl-9,10-diethoxyanthracene-2-sulfonate, N-(trifluoroxaethylsulfonyloxy)succinimide, N-(trifluoromethylsulfonyloxy) phthalimide, N-(trifluoromethylsulfonyloxy)diphenylmaleimide, N-(trifluoromethylsulfonyloxy)bicyclo[2.2.1]hept-5-ene-2,3-dicarboxyimide, N-(trifluoromethylsulfonyloxy)naphthylimide, and the like, diazomethanes such as bis(trifluoromethylsulfonyl)diazomethane, bis(cyclohexylsulfonyl)diazomethane, bis(phenylsulfonyl)diazomethane, bis(p-tolylsulfonyl)diazomethane, bis(2,4-xylylsulfonyl)diazomethane, bis(p-chlorophenylsulfonyl)diazomethane, methylsulfonyl-p-toluenesulfonyldiazomethane, cyclohexylsulfonyl(1,1-dimethylethylsulfonyl)diazomethane, bis(1,1-dimethylethylsulfonyl)diazomethane, phenylsulfonyl(benzoyl)diazomethane, and the like, carboxylates, iron arene complexes, and the like.

As a silanol condensation catalyst, two or more different kinds of catalysts may be used in combination, and a combined use of the aforementioned amine compound and carboxylic acid may afford an effect of enhancing the reactivity. The catalytic activity can also be enhanced by using an acid such as carboxylic acid and the like and a phosphonium salt compound such as tetrabutyl phosphonium hydroxide and the like in combination. There is a possibility that the reactivity is enhanced by using a halogen-substituted aromatic compound such as pentafluorophenol, pentafluorobenzaldehyde and the like and an amine compound in combination.

Use amount of the silanol condensation catalyst is preferably 0.001 to 20 parts by weight, more preferably 0.01 to 15 parts by weight, and particularly preferably 0.01 to 10 parts by weight relative to 100 parts by weight of the polyoxyalkylene polymer (A) having a hydrolyzable silyl group. If the blending amount of the silanol condensation catalyst is less than 0.001 parts by weight, it may take a long period of time for the curable composition to cure, or it may become difficult to cure the curable composition at a desired level. On the other hand, if the blending amount of the silanol condensation catalyst exceeds 20 parts by weight, the reaction rate becomes fast so that usable time of the composition without being cured is short, and thus a rapid operation is required for producing the complex, or storage period during which the composition can be stably stored becomes short.

### <Filler>

The curable composition may be blended with various fillers. Examples of the filler include reinforcing fillers such as fumed silica, precipitating silica, crystal silica, molten silica, dolomite, silicic anhydride, hydrous silicic acid, and carbon black; fillers such as heavy calcium carbonate, colloidal calcium carbonate, magnesium carbonate, diatomite, calcined clay, clay, talc, titanium oxide, bentonite, organic bentonite, ferric oxide, aluminum fine powder, flint powder, zinc oxide, activated zinc oxide, resin powders such as PVC powder, PMMA powder; fiber fillers such as glass fiber and filament, and the like.

Use amount of the filler is preferably 1 to 300 parts by weight, and particularly preferably 10 to 250 parts by weight relative to 100 parts by weight of the polyoxyalkylene polymer (A) having a hydrolyzable silyl group.

Organic balloons and inorganic balloons may be added to improve the workability (disconnection or the like) of the composition. These fillers can be subjected to a surface treatment, and only one kind thereof may be used, or two or more kinds thereof may be mixed and used. To improve the workability (disconnection or the like), the particle diameter of the balloon is preferably not more than 0.1 mm. Furthermore, to have the surface of the cured product in matte state, it is preferably 5 to 300 µm.

The balloon is a spherical filler with a hollow inside. The balloon can be added to reduce the weight (i.e., lowering the specific gravity) of the composition. Examples of the materials of the balloon may include, but are not limited to, inorganic materials such as glass, shirasu, silica, and the like, and organic materials such as phenol resin, urea resin, polystyrene, saran, and the like. As for the materials of the balloon, it is also possible to mix plural kinds, or may be a composite material of an inorganic material and an organic material, or a laminate material consisting of plural layers.

### <Adhesiveness imparting agent>

An adhesiveness imparting agent may be added to the composition of the present invention.

As the adhesiveness imparting agent, a silane coupling agent, a reaction product of a silane coupling agent, or a compound other than a silane coupling agent can be added.

Specific examples of the silane coupling agent include amino group-containing silanes such as γ-aminopropyltrimethoxysilane, γ-aminopropyltriethoxysilane, γ-aminopropyltris(2-propoxy)silane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, N-β-aminoethyl-γ-aminopropyltriisopropoxysilane, N-β-(β-aminoethyl)aminoethyl-γ-aminopropyltrimethoxysilane, N-6-aminohexyly-γ-aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, (aminomethyl)dimethoxymethylsilane, (aminomethyl)trimethoxysilane, (phenylaminomethyl)dimethoxymethylsilane, (phenylaminomethyl)trimethoxysilane, bis(3-trimethoxysilylpropyl)amine, N,N'-bis[3-(trimethoxysilyl)propyl]ethylenediamine, and the like; isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, α-isocyanatomethyltrimethoxysilane, α-isocyanatomethyldimethoxymethylsilane, and the like; mercapto group-containing silanes such as γ-mercaptopropyltrimethoxysilane, γ-mercaptopropyltriethoxysilan, γ-mercaptopropylmethyldimethoxysilane, γ-mercaptopropylmethyldiethoxysilane, and the like; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, β-(3,4-epoxycyclohexyl)ethyltriethoxysilane, and the like; carboxy silanes such as β-carboxyethyltriethoxysilane, β-carboxyethylphenylbis(β-methoxyethoxy)silane, N-β-(carboxymethyl)aminoethyl-γ-aminopropyltrimethoxysilane, and the like; vinyl unsaturated group-containing silanes such as vinyltrimethoxysilane, vinyltriethoxysilane, γ-methacryloyloxypropylmethyldimethoxysilane, γ-acryloyloxypropylmethyltriethoxysilane, and the like; halogen-containing silanes such as γ-chloropropyltrimethoxysilane, and the like; isocyanurate silanes such as tris(trimethoxysilyl)isocyanurate, and the like; carbamate silanes such as methyl(N-dimethoxymethylsilyimethyl)carbamate, methyl(N-trimethoxysilylmethyl)carbamate, methyl(N-dimethoxymethylsilylpropyl)carbamate, methyl(N-trimethoxysilylpropyl)carbamate, and the like; alkoxy group-containing silanes such as (methoxymethyl)dimethoxymethylsilane, (methoxymethyl)trimethoxysilane, (ethoxymethyl)trimethoxysilane, (phenoxymethyl)trimethoxysilane, and the like; acid anhydride-containing silanes such as 3-(trimethoxysilyl)propylsuccinic anhydride, 3-(triethoxysilyl)propylsuccinic anhydride, and the like. In addition, partially condensed products of these, and modified derivatives thereof such as amino-modified silyl polymer, silylated amino polymer, unsaturated aminosilane complex, phenylamino long-chain alkyl silane, aminosilylated silicone, silylated polyester, and the like can also be used as silane coupling agents.

Meanwhile, a silane coupling agent which contains a methoxy group as a hydrolyzable group causes an occurrence of methanol upon curing. Such occurrence of methanol serves as a cause of having swelling in a complex, and thus it is preferably as little as possible. It is preferable that content of silane coupling agent which contains a methoxy group as a hydrolyzable group is 2 parts by weight or less.

More preferably, it is a silane coupling agent of which hydrolyzable silyl group is represented by the following general formula (1):

-SiRₐ(OR¹)₃₋ₐ (1)

(each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2).

Specific examples thereof include amino group-containing silanes such as γ-aminopropyltriethoxysilane, γ-aminopropyltris(2-propoxy)silane, γ-aminopropylmethyldiethoxysilane, N-β-aminoethyl-γ-aminopropyltriethoxysilane, N-β-aminoethyl-γ-aminopropylmethyldiethoxysilane, N-β-aminoethyl-γ-aminopropyltriisopropoxysilane, γ-ureidopropyltriethoxysilane, N-vinylbenzyl-γ-aminopropyltriethoxysilane, or N-cyclohexylaminomethyltriethoxysilane; isocyanate group-containing silanes such as γ-isocyanatopropyltriethoxysilane or γ-isocyanatopropylmethyldiethoxysilane; mercapto group-containing silane such as γ-mercaptopropyltriethoxysilane; epoxy group-containing silanes such as γ-glycidoxypropyltriethoxysilane or β-(3,4-epoxycyclohexyl)ethyltriethoxysilane; carboxysilanes such as β-carboxyethyltriethoxysilane; and vinyl type unsaturated group-containing silanes such as vinyltriethoxysilane or γ-acryloyloxypropylmethyltriethoxysilane.

The above silane coupling agent may be used either singly or in combination thereof.

In addition, a reaction product of various silane coupling agents can also be used. As the reaction product, a reaction product of an isocyanate silane and a hydroxyl group-containing compound, a reaction product of an isocyanate silane and an amino group-containing compound, a reaction product of an aminosilane and an acryl group-containing compound, a reaction product of an aminosilane and a (meth)acrylic group-containing compound (Michael addition reaction product), a reaction product of an aminosilane and an epoxy group-containing compound, a reaction product of an epoxysilane and a carboxylic acid group-containing compound, a reaction product of an epoxysilane and an amino group-containing compound, and the like can be mentioned. Reaction products of silane coupling agents such as a reaction product of an isocyanate silane and an aminosilane, a reaction product of an aminosilane and a (meth)acrylic group-containing silane, a reaction product of an aminosilane and an epoxysilane, a reaction product of an aminosilane and an acid anhydride-containing silane, and the like can also be used.

Specific examples of the adhesiveness imparting agent other than the silane coupling agent include, but are not particularly limited to, an epoxy resin, a phenol resin, sulfur, alkyl titanates, aromatic polyisocyanate, and the like. The adhesiveness imparting agent may be used either singly or two or more kinds thereof may be used as a mixture. By adding the adhesiveness imparting agent, the adhesiveness to an adherend can be improved.

Use amount of the silane coupling agent is preferably 0.1 to 20 parts by weight, and particularly preferably 0.5 to 10 parts by weight relative to 100 parts by weight of the polyoxyalkylene polymer (A) having a hydrolyzable silyl group.

### <Plasticizing agent>

The curable composition may be added with a plasticizing agent. Addition of a plasticizing agent enables adjustment of the viscosity and slump property of the composition, and mechanical properties of a cured product obtained by curing the curable composition, such as hardness, tensile strength, elongation, and the like. Specific examples of the plasticizing agent include phthalate compounds such as dibutyl phthalate, diisononyl phthalate (DINP), diheptyl phthalate, di(2-ethylhexyl) phthalate, diisodecyl phthalate (DIDP), butyl benzyl phthalate, and the like; terephthalate compounds such as bis(2-ethylhexyl)-1,4-benzenedicarboxylate, and the like (specifically, product name: EASTMAN168 (manufactured by EASTMAN CHEMICAL)); non-phthalate compounds such as diisononyl 1,2-cyclohexane dicarboxylate, and the like (specifically, product name; Hexamoll DINCH (manufactured by BASF)); polyvalent aliphatic carboxylate compounds such as dioctyl adipate, dioctyl sebacate, dibutyl sebacate, diisodecyl succinate, tributyl acetylcitrate, and the like; unsaturated fatty acid ester compounds such as butyl oleate, methyl acetylricinoleate, and the like; phenyl alkylsulfonates (specifically, product name: Mesamoll (manufactured by LANXESS)); phosphate compounds such as tricresyl phosphate, tributyl phosphate, and the like; trimellitate compounds; chlorinated paraffin; hydrocarbon oils such as alkyl diphenyl, partially hydrogenated terphenyl, and the like; process oil; epoxy plasticizing agents such as epoxidized soybean oil, benzyl epoxystearate, and the like.

In addition, a polymer plasticizing agent can be used. When a polymer plasticizing agent is used, the initial physical properties can be maintained for a long period of time as compared to use of a low molecular weight plasticizing agent. Furthermore, the drying property (i.e., application property) can be improved when a cured product is applied with an alkyd coating material. Specific examples of the polymer plasticizing agent include a vinyl polymer, an ester compound, a polyester plasticizing agent, polyether polyol, polyether polyol derivatives, and a polystyrene plasticizing agent. The vinyl polymer is a polymer obtained by polymerization of various vinyl monomers based on various methods. The vinyl polymer can be a homopolymer of a single monomer, or a copolymer of two or more kinds of a monomer. Examples of the ester compound include an ester compound of aliphatic alcohol having 2 or more alcoholic hydroxyl groups such as diethylene glycol dibenzoate, triethylene glycol dibenzoate, and pentaerythritol ester. Examples of the polyester plasticizing agent include a polyester plasticizing agent obtained from a dibasic acid and a dihydric alcohol, for example. Examples of the dibasic acid include sebacic acid, adipic acid, azelaic acid, and phthalic acid. Examples of the dihydric alcohol include ethylene glycol, diethylene glycol, triethylene glycol, propylene glycol, and dipropylene glycol. Examples of the polyether polyol include polyethylene glycol, polypropylene glycol, and polytetramethylene glycol. Number average molecular weight of the polyether polyol is preferably 500 or more, and more preferably 1000 or more. Examples of the polyether polyol derivatives include those polyether polyols of which hydroxyl groups are modified into an ester group, an ether group, and the like. Examples of the polystyrene plasticizing agent include polystyrene and poly-α-methylstyrene. Furthermore, polybutadiene, polybutene, polyisobutylene, butadiene-acrylonitrile, polychloroprene, and the like can be also mentioned. Various polymers can also be copolymerized with reactive group-containing monomers to impart physical properties. For example, it is known that use of polybutadiene grafted with maleic acid improves adhesiveness improving effect and elasticity recovery rate.

Use amount of the plasticizing agent is preferably 5 to 150 parts by weight, more preferably 10 to 120 parts by weight, and particularly preferably 20 to 100 parts by weight relative to 100 parts by weight of the polyoxyalkylene polymer (A) having a hydrolyzable silyl group. If the use amount is less than 5 parts by weight, it may become difficult to obtain the desired effect of the plasticizing agent. If it exceeds 150 parts by weight, it may be difficult to form a cured product with good mechanical strength. The plasticizing agent may be used either singly, or two or more kinds thereof may be used in combination. In addition, a low molecular weight plasticizing agent and a polymer plasticizing agent may be used in combination. Furthermore, these plasticizing agents can also be added during production of polymer.

### <Solvent and diluent>

The curable composition may be added with a solvent or a diluent. While the solvent and diluent are not particularly limited, aliphatic hydrocarbon, aromatic hydrocarbon, alicyclic hydrocarbon, halogenated hydrocarbon, alcohol, ester, ketone, ether, and the like can be used. When the solvent or diluent is used, the boiling point of the solvent is preferably 150°C or higher, more preferably 200°C or higher, and particularly preferably 250°C or higher, in view of the problem of air pollution during indoor use of the composition. Only one kind of the above-mentioned solvent or diluent may be used, or two or more kinds thereof may be used in combination.

Use amount of the solvent and diluent is preferably 5 to 150 parts by weight, more preferably 10 to 120 parts by weight, and particularly preferably 20 to 100 parts by weight relative to 100 parts by weight of the polyoxyalkylene polymer (A) having a hydrolyzable silyl group. Meanwhile, due to the possibility to become a cause of foaming, it is preferably less than 5 parts by weight, or less than 1 part by weight relative to 100 parts by weight of the polymer (A).

### <Antisagging agent>

An antisagging agent may be added to the curable composition, if necessary, to prevent sagging and improve workability. Examples of the antisagging agent include, but are not particularly limited, polyamide waxes; hydrogenated castor oil derivatives; metal soaps such as calcium stearate, aluminum stearate, barium stearate, and the like. Furthermore, when a rubber powder having a particle size of 10 to 500 µm described in JP H11-349916 A or an organic fiber described in JP 2003-155389 A is used as an antisagging agent, a composition showing high thixotropy and good workability can be obtained. Such antisagging agent may be used either singly or two or more kinds thereof may be used in combination.

Use amount of the antisagging agent is preferably 0.1 to 20 parts by weight relative to 100 parts by weight of the polyoxyalkylene polymer (A) having a hydrolyzable silyl group.

### <Antioxidant>

In the curable composition, an antioxidant (i.e., antiaging agent) can be used. By using an antioxidant, the weather resistance of a cured product can be enhanced. Examples of the antioxidant include hindered-phenol based, monophenol based, bisphenol based, and polyphenol based, but the hindered-phenol based is preferable. Similarly, the hindered-amine-based photostabilizer represented by Tinuvin 622LD, Tinuvin 144, CHIMASSORB 944LD, and CHIMASSORB 119FL (all manufactured by BASF); ADEKASTAB MARK LA-57, ADEKASTAB MARK LA-62, ADEKASTAB MARK LA-67, ADEKASTAB MARK LA-63, and ADEKASTAB MARK LA-68 (all manufactured by ADEKA Corporation); Sanol LS-770, Sanol LS-765, Sanol LS-292, Sanol LS-2626, Sanol LS-1114, Sanol LS-744 (all manufactured by Sankyo Corporation) can be also used. Specific examples of the antioxidant are also described in JP H04-283259 A or JP H09-194731 A.

Use amount of the antioxidant is, relative to 100 parts by weight of the polyoxyalkylene polymer (A) having a hydrolyzable silyl group, preferably 0.1 to 10 parts by weight, and more preferably 2 to 7 parts by weight.

### <Photostabilizer>

In the curable composition, a photostabilizer can be used. When a photostabilizer is used, the deterioration of a cured product that is caused by photooxidation can be prevented. Examples of the photostabilizer include benzotriazole-based, hindered-amine-based, and benzoate-based compounds, but the hindered-amine-based is particularly preferable.

Use amount of the photostabilizer is preferably in the range of 0.1 to 10 parts by weight, and more preferably 0.2 to 5 parts by weight relative to 100 parts by weight of the polyoxyalkylene polymer (A) having a hydrolyzable silyl group.

### <Ultraviolet absorbing agent >

In the curable composition, an ultraviolet absorbing agent can be used. When an ultraviolet absorbing agent is used, weather resistance of the surface of a cured product can be enhanced. Examples of the ultraviolet absorbing agent include benzophenone-based, benzotriazole-based, salicylate-based, substituted tolyl-based and metal chelate-based compounds, and the like. Of these, it is preferably the benzotriazole-based compound. Examples thereof include product name Tinuvin P, Tinuvin 213, Tinuvin 234, Tinuvin 326, Tinuvin 327, Tinuvin 328, Tinuvin 329, and Tinuvin 571 (all manufactured by BASF). It is particularly preferably a 2-(2H-1,2,3-benzotriazol-2-yl)-phenol-based compound. Furthermore, a combination of a phenol-based or hindered-phenol-based antioxidant, and a hindered-amine-based photostabilizer, and a benzotriazole-based ultraviolet absorbing agent is preferably used.

Use amount of the ultraviolet absorbing agent is preferably in the range of 0.1 to 10 parts by weight, and more preferably 0.2 to 5 parts by weight relative to 100 parts by weight of the polyoxyalkylene polymer (A) having a hydrolyzable silyl group.

### <Physical property modifier >

The curable composition may be added, if necessary, with a physical property modifier that controls the tensile property of a cured product to be produced. While the physical property modifier is not particularly limited, for example, alkylalkoxysilanes such as phenoxytrimethylsilane, methyltrimethoxysilane, dimethyldimethoxysilane, trimethylmethoxysilane, n-propyltrimethoxysilane, and the like; arylalkoxysilanes such as diphenyldimethoxysilane, phenyltrimethoxysilane, and the like; alkylisopropenoxysilanes such as dimethyldiisopropenoxysilane, methyltriisopropenoxysilane, γ-glycidoxypropylmethyldiisopropenoxysilane, and the like; trialkylsilyl borates such as tris (trimethylsilyl) borate, tris(triethylsilyl) borate, and the like; silicone varnishes; polysiloxanes, and the like can be mentioned. By using the above-mentioned physical property modifier, the hardness of a cured product of the curable composition may be increased or conversely decreased to improve elongation at break. The above-mentioned physical property modifier may be used either singly, or two or more kinds thereof may be used in combination.

Particularly, a compound that produces a compound having a monovalent silanol group by hydrolysis has an activity of lowering the modulus of a cured product without worsening the stickiness of the surface of the cured product. Particularly, a compound forming trimethylsilanol is preferable. As the compound that forms a compound having a monovalent silanol group in a molecule by hydrolysis, a compound described in JP H05-117521 A can be mentioned as an example. In addition, a compound that forms a silicone compound to form silane monools such as trimethylsilanol, and the like by hydrolysis, which is a derivative of an alkyl alcohol such as hexanol, octanol, decanol and the like, a compound that forms a silicone compound to form a silane monool by hydrolysis, which is a derivative of a polyhydric alcohol having not less than 3 hydroxy groups, such as trimethylolpropane, glycerol, pentaerythritol, sorbitol and the like as described in JP H11-241029 A can be mentioned.

Use amount of the physical property modifier is preferably 0.1 to 10 parts by weight, and more preferably 0.5 to 5 parts by weight relative to 100 parts by weight of the polyoxyalkylene polymer (A) having a hydrolyzable silyl group.

### <Tackiness imparting resin>

The curable composition may be added with a tackiness imparting resin for the purpose of enhancing the adhesiveness and close adhesiveness to a substrate or according to other needs. While the tackiness imparting resin is not particularly limited, one generally used can be used.

Specific examples thereof include a terpene-based resin, an aromatic-modified terpene resin, and a hydrogenated terpene resin obtained by hydrogenation of those resins, a terpene-phenol resin in which terpenes are copolymerized with phenols, a phenol resin, a modified phenol resin, a xylene-phenol resin, a cyclopentadiene-phenol resin, a coumarone indene resin, a rosin resin, a rosin ester resin, a hydrogenated rosin ester resin, a xylene resin, a low molecular weight polystyrene-based resin, a styrene copolymer resin, a petroleum resin (for example, C5 hydrocarbon resin, C9 hydrocarbon resin, C5C9 hydrocarbon copolymerized resin etc.), a hydrogenated petroleum resin, DCPD resin, and the like. They may be used either singly or two or more kinds thereof may be used in combination.

Examples of the styrene-based block copolymer and the hydrogenated product thereof include a styrene-butadienestyrene block copolymer (SBS), a styrene-isoprene-styrene block copolymer (SIS), a styrene-ethylene butylene-styrene block copolymer (SEBS), a styrene-ethylene propylene-styrene block copolymer (SEPS), a styrene-isobutylene-styrene block copolymer (SIBS), and the like.

Of these, it is preferably a terpene-phenol resin since it shows high compatibility with the polyoxyalkylene polymer (A) having a hydrolyzable silyl group and affords highly close adhering effect. On the other hand, when color tone is important, a hydrocarbon resin is preferable.

Use amount of the tackiness imparting resin is preferably 2 to 100 parts by weight, more preferably 5 to 50 parts by weight, and even more preferably 5 to 30 parts by weight relative to 100 parts by weight of the polyoxyalkylene polymer (A) having a hydrolyzable silyl group. If it is less than 2 parts by weight, it is difficult to obtain the effect of adhesion and close adhesion to a substrate, and, if it is more than 100 parts by weight, the viscosity of the composition becomes exceedingly high so that the handleability may become deteriorated. Furthermore, as the aforementioned component (A) is contained in the curable composition, it is easy to suppress the swelling of a cured product of the curable composition in a complex even when a polymer with high heat resistance is not added to the curable composition. Due to such reasons, a tackiness imparting resin with high heat resistance may be added either in a small amount or not added in the curable composition. Addition amount of the tackiness imparting resin with high heat resistance is preferably less than 1 part by weight relative to 100 parts by weight of the component (A), and more preferably, it is substantially not added.

### <Compound having epoxy group>

In the curable composition, a compound having an epoxy group may be used. By the use of the compound having an epoxy group, the recovery property of a cured product can be increased. As the compound having an epoxy group, epoxidized unsaturated fats and oils, epoxidized unsaturated fatty acid esters, alicyclic epoxy compounds, epichlorohydrin derivative and mixtures thereof, and the like can be mentioned as an example. Specifically, epoxidized soybean oil, epoxidized linseed oil, bis(2-ethylhexyl)-4,5-epoxycyclohexane-1,2-dicarboxylate (E-PS), epoxyoctyl stearate, epoxybutyl stearate, and the like can be mentioned. Of these, E-PS is particularly preferable. The epoxy compound is used within a range of preferably 0.5 to 50 parts by weight relative to 100 parts by weight of the polyoxyalkylene polymer (A) having a hydrolyzable silyl group.

### <Photocurable substance>

A photocurable substance may be used in the curable composition. When a photocurable substance is used, a film of the photocurable substance is formed on the surface of a cured product, and thus the stickiness of a cured product or weather resistance of a cured product can be improved. The photocurable substance creates a change in physical properties like curing by causing a chemical change in the molecular structure within a relative short time by an action of light. As the compound of this type, various ones like an organic monomer, an oligomer, a resin, a composition containing same are known, and any commercially available product thereof can be used. As a representative example, an unsaturated acrylic compound, polyvinyl cinnamates, an azidated resin, and the like can be used.

Examples of the unsaturated acrylic compound include monomers, oligomers, and a mixture thereof, having one or several acrylic or methacrylic unsaturated groups, and examples thereof include a monomer like propylene (or butylene, ethylene) glycol di(meth)acrylate and neopentyl glycol di(meth)acrylate, and oligoesters having a molecular weight of 10,000 or less. Specific examples thereof include special acrylate (bifunctional) Aronix M-210, Aronix M-215, Aronix M-220, Aronix M-233, Aronix M-240, Aronix M-245; (trifunctional) Aronix M305, Aronix M-309, Aronix M-310, Aronix M-315, Aronix M-320, Aronix M-325, and (multifunctional) Aronix M-400, and the like. Particularly, a compound containing an acryl functional group is preferable, and a compound containing not less than 3 functional groups on average in one molecule is more preferable (in the above, all Aronix are a product of TOAGOSEI CO., LTD.).

Polyvinyl cinnamates indicate a photosensitive resin which has a cinnamoyl group as a photosensitive group, and various polyvinyl cinnamate derivatives are exemplified in addition to a compound of polyvinyl alcohol esterified with cinnamic acid. The azidated resin is known as a photosensitive resin which has an azide group as photosensitive group, and, other than rubber photosensitive solution generally added with diazide compound as a photosensitizer, detailed exemplifications are given in "Photosensitive Resin" (published on March 17, 1972 by Insatsu Gakkai Shuppanbu Ltd., page 93-, page 106-, page 117-), and it may be used either singly, or after mixing thereof and, if necessary, with addition of a sensitizer. There is a case in which, as a sensitizer like ketones and nitro compounds or a promoter like amines is added, the effect is enhanced.

Use amount of the photocurable substance is preferably 0.1 to 20 parts by weight, and more preferably 0.5 to 10 parts by weight relative to 100 parts by weight of the polyoxyalkylene polymer (A) having a hydrolyzable silyl group. When the amount is less than 0.1 parts by weight, there may be a case in which the weather resistance of a cured product is not enhanced to a desired level. When the amount is more than 20 parts by weight, there may be a case in which the cured product becomes too hard and tends to have an occurrence of a crack even though the weather resistance of a cured product can be improved.

### <Oxygen curable substance>

An oxygen curable substance may be used in the curable composition. As the oxygen curable substance, an unsaturated compound capable of reacting with oxygen in the air can be mentioned as an example. The oxygen curable substance reacts with oxygen in the air to form a cured film near the surface of a cured product, thereby playing a role of preventing stickiness of the surface or attachment of dirt and dust on the surface of a cured product, and the like. Specific examples of the oxygen curable substance include dry oil such as tung oil, linseed oil, and the like, various alkyd resins obtained by modifying the compound; acrylate polymer modified by dry oil, epoxy resin, silicone resin; liquid polymers such as 1,2-polybutadiene, 1,4-polybutadiene, C5 to C8 diene polymer, and the like obtained by polymerization or copolymerization of diene compounds such as butadiene, chloroprene, isoprene, 1,3-pentadiene, and the like; liquid copolymers such as NBR, SBR, and the like obtained by copolymerization of those diene compounds and copolymerizable monomers such as acrylonitrile, styrene, and the like, such that the diene compound becomes the main component, and also various modified products of the above (maleic modified products, boil oil modified products, and the like) and the like. They may be used either singly or two or more kinds thereof may be used in combination. Of these, tung oil or liquid diene polymer is particularly preferable. In addition, a combined use of a catalyst promoting the oxidation curing reaction or a metal dryer may enhance the effect. As such catalyst and metal dryer, metal salts such as cobalt naphthenate, lead naphthenate, zirconium naphthenate, cobalt octylate, zirconium octylate, and the like, amine compounds, and the like can be mentioned as an example.

Use amount of the oxygen curable substance is preferably within a range of 0.1 to 20 parts by weight, and more preferably 0.5 to 10 parts by weight relative to 100 parts by weight of the polyoxyalkylene polymer (A) having a hydrolyzable silyl group. When the aforementioned use amount is less than 0.1 parts by weight, it is difficult to obtain the effect of improving a contamination property. When it exceeds 20 parts by weight, it may be difficult to form a cured product with favorable tensile property. As described in JP H03-160053 A, the oxygen curable substance is preferably used in combination with a photocurable substance.

### <Surface modifying agent>

The curable composition may be added with a surface modifying agent. As the surface modifying material, long-chain alkylamines such as laurylamine and the like, phosphorous compounds such as sodium 2,2'-methylenebis(4,6-di-t-butylphenyl)phosphate, tris(2,4-di-t-butylphenyl)phosphite and the like, oxazolidine compounds, and the like can be mentioned.

Use amount of the surface modifying agent is preferably within a range of 0.3 to 10 parts by weight relative to 100 parts by weight of the polyoxyalkylene polymer (A) having a hydrolyzable silyl group.

### <Epoxy resin>

In the curable composition, an epoxy resin can be used in combination. Furthermore, the epoxy resin herein is defined as a compound which has an epoxy group in non-cured state. The curable composition added with an epoxy resin may be used as, in terms of the relationship with a substrate, an adhesive, especially an adhesive for external wall tiles. Examples of the epoxy resin include, but are not limited to, flame-retardant epoxy resins such as epichlorohydrin-bisphenol A epoxy resin, epichlorohydrin-bisphenol F epoxy resin, tetrabromobisphenol A glycidyl ether and the like, novolac epoxy resin, hydrogenated bisphenol A epoxy resin, glycidyl ether epoxy resin of bisphenol A propylene oxide addition product, p-oxybenzoic acid glycidyl ether ester epoxy resin, m-aminophenol-based epoxy resin, diaminodiphenylmethane-based epoxy resin, urethane modified epoxy resin, various kinds of alicyclic epoxy resins, N,N-diglycidyl aniline, N,N-diglycidyl-o-toluidine, triglycidyl isocyanurate, polyalkylene glycol diglycidyl ether, a glycidyl ether of a polyhydric alcohol such as glycerin and the like, hydantoin type epoxy resin, an epoxy product of a unsaturated polymer such as petroleum resin and the like. The epoxy resin is not limited to them, and a commonly used epoxy resin can be used. One containing at least two epoxy groups in a molecule may be preferably used, since it shows high reactivity during curing, and the cured product easily forms a three-dimensional network, and the like. Preferred are bisphenol A type epoxy resins, novolac type epoxy resin and the like.

The use ratio of these epoxy resins and the component (A) is, in terms of the weight ratio, within a range of the component (A)/epoxy resin = 100/1 to 1/100 from the viewpoint of easy forming of a cured product which has good impact strength and toughness.

Furthermore, as the curable composition contains the component (A), swelling of a cured product of the curable composition in the complex can be easily suppressed even when a polymer with high heat resistance is not added to the curable composition. Due to such reasons, the epoxy resin having high heat resistance may be added either in a small amount or not added in the curable composition. Specifically, the addition amount of the epoxy resin can be suppressed to less than 1 part by weight relative to 100 parts by weight of the component (A), and there is no problem even when it is substantially not added.

When an epoxy resin is added, the curable composition can naturally contain a curing agent for curing the epoxy resin for combined use. A usable curing agent for epoxy resin is not particularly limited, and a conventionally-used curing agent for epoxy resin can be used. Specific examples thereof include, but are not limited to, primary or secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine-terminal polyether and the like; tertiary amines and salts thereof such as 2,4,6-tris(dimethylaminomethyl)phenol, tripropylamine, and the like; polyamide resins; imidazoles; dicyanodiamides; boron trifluoride complex compounds, carboxylic anhydrides such as phthalic anhydride, hexahydrophthalic anhydride, tetrahydrophthalic anhydride, dodecinyl succinic anhydride, pyromellitic anhydride, chlorendic anhydride, and the like; alcohols; phenols; carboxylic acids; compounds such as a diketone complex compound of aluminum or zirconium, and the like. Furthermore, the curing agent may be used either singly or two or more kinds thereof may be used in combination.

When a curing agent for epoxy resin is used, the amount thereof to be used is within a range of 0.1 to 300 parts by weight relative to 100 parts by weight of the epoxy resin.

As the curing agent for epoxy resin, ketimine can be used. Ketimine is stably present in a state free of moisture, and decomposed into primary amine and ketone by reacting with moisture, and the resulting primary amine is a room temperature-curable curing agent for epoxy resin. Use of ketimine allows obtainment of a one-liquid type composition. Such ketimine can be obtained by the condensation reaction of an amine compound and a carbonyl compound.

For the synthesis of ketimine, known amine and carbonyl compounds may be used. For example, as the amine compound, diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, p,p'-biphenylenediamine, and the like; polyvalent amines such as 1,2,3-triaminopropane, triaminobenzene, tris(2-aminoethyl)amine, tetra(aminomethyl)methane, and the like; polyalkylenepolyamines such as diethylenetriamine, triethylenetriamine, tetraethylenepentamine, and the like; polyoxyalkylene-based polyamine; aminosilanes such as γ-aminopropyl triethoxysilane, N-(β-aminoethyl)-γ-aminopropyltrimethoxysilane, N-(β-aminoethyl)-γ-aminopropylmethyldimethoxysilane, and the like can be used. As the carbonyl compound, aldehydes such as acetaldehyde, propionaldehyde, n-butylaldehyde, isobutylaldehyde, diethylacetoaldehyde, glyoxal, benzaldehyde, and the like; cyclic ketones such as cyclopentanone, trimethylcyclopentanone, cyclohexanone, trimethylcyclohexanone, and the like; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, diisobutyl ketone, and the like; β-dicarbonyl compounds such as acetylacetone, methyl acetoacetate, ethyl acetoacetate, dimethyl malonate, diethyl malonate, methyl ethyl malonate, dibenzoylmethane, and the like can be used.

When an imino group is present in ketimine, the imino group may be reacted with styrene oxide; glycidyl ethers such as butylglycidyl ether, allyl glycidyl ether, and the like; glycidyl ester, and the like.

These ketimines may be used either singly or two or more kinds thereof may be used in combination. Ketimine is used in an amount of 1 to 100 parts by weight relative to 100 parts by weight of the epoxy resin. The amount thereof to be used varies depending on the kind of epoxy resin and ketimine.

### <Flame retardant>

The curable composition may be added with a flame retardant such as a phosphorus compound such as ammonium polyphosphate, tricresyl phosphate, and the like, aluminum hydroxide, magnesium hydroxide, thermally expandable black lead, and the like. The flame retardant may be used either singly or two or more kinds thereof may be used in combination.

The flame retardant is used preferably at 5 to 200 parts by mass, and more preferably at 10 to 100 parts by mass relative to 100 parts by weight of the polyoxyalkylene polymer (A) having a hydrolyzable silyl group.

### <<Preparation of curable composition>>

It is possible that the curable composition is prepared as a one-component type in which all blending components are blended, sealed, and stored in advance, and, after application, cured by moisture in the air. Furthermore, it can be also prepared as a two-component type in which components including a separate curing catalyst as a curing agent, a filler, a plasticizing agent, and water are blended in advance, and the blended material and the organic polymer composition are admixed with each other before use. From the viewpoint of the workability, the one-component type is preferable.

In a case in which the curable composition is a one-component type, a blending component containing moisture is preferably used after drying by dehydration in advance or dehydrated during blending kneading by depressurization, and the like, because all the blending components are blended in advance. In a case in which the curable composition is a two-component type, there is little possibility of having increased viscosity or gellation of the blended product even when a slight amount of moisture is contained in the blending components, since a silanol condensation catalyst is not required to be blended in a main formulation which contains the organic polymer having a reactive silicon group. However, when storage stability over a long period of time is necessary, it is preferably dried by dehydration. As for the method for dehydration and drying, in case of a solid product such as powder, and the like, a heat-drying method is suitable, and in case of a liquid product, a dehydration method under reduced pressure or a dehydration method using synthetic zeolite, activated alumina, silica gel, calcium oxide, or magnesium oxide is preferable. In addition, it is also possible to have dehydration by adding a small amount of an isocyanate compound followed by a reaction between the isocyanate group and water. It is also possible that dehydration is carried out by blending an oxazolidine compound such as 3-ethyl-2-methyl-2-(3-methylbutyl)-1,3-oxazolidine followed by a reaction with water. In addition to those dehydration and drying methods, by adding lower alcohol such as methanol or ethanol; an alkoxysilane compound such as n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane; or silicate such as methylsilicate or ethylsilicate, the storage stability is additionally enhanced.

Meanwhile, when alkoxysilane of which hydrolyzable group is a methoxy group is used, methanol is generated upon curing to become a cause of swelling, and thus it is preferable to use a silane coupling agent having a hydrolyzable group that is represented by the following general formula (1):

-SiRₐ(OR¹)₃₋ₐ (1)

(Each R independently represents a hydrocarbon group having 1 to 10 carbon atoms that may have a substituent group formed of a heteroatom-containing group or a halogen atom. Each R¹ independently represents a hydrocarbon group having 2 to 10 carbon atoms. a is 0, 1 or 2).

Specific examples thereof include n-propyltriethoxysilane, vinyltriethoxysilane, γ-mercaptopropyltriethoxysilane, γ-glycidoxypropyltriethoxysilane, and ethyl silicate.

Use amount of the dehydrating agent, in particular, a silicon compound capable of reacting with water, is within a range of 0.1 to 20 parts by weight, and preferably 0.5 to 10 parts by weight relative to 100 parts by weight of the polyoxyalkylene polymer (A) having a hydrolyzable silyl group.

### <<Method for producing complex>>

According to the present invention, the curable composition containing the polyoxyalkylene polymer (A) having a hydrolyzable silyl group is coated on a substrate, a heat-curable coating material is coated thereafter, and then heating is carried out to produce a complex.

The substrate is not particularly limited, as long as it can endure the temperature during heating, and examples thereof include a metal such as iron, steel plate, stainless steel, aluminum, tinplate, zinc, or cupper, a resin such as acrylic resin, phenol resin, polypropylene, polycarbonate, polyamide, melanin resin, epoxy resin, polyurethane, fiber reinforced resin (FRP), or carbon fiber reinforced resin (CFRP), and an inorganic substrate such as glass, cement, mortar, tile, or brick.

Temperature at the time of coating a substrate with the curable composition is not particularly limited, and it is preferably 0°C to 50°C, more preferably 10°C to 40°C, and particularly preferably room temperature.

The heating step is preferably performed before curing of the curable composition.
"Before curing" means before complete curing of the inside of the curable composition, and it is preferable that curing is carried out on the same day as the curable composition is coated on a substrate. It is more preferably 1 minute or longer and 10 hours or shorter, and particularly preferably 10 minutes or longer and 5 hours or shorter. It can be estimated by gel fraction of the curable composition during curing, and the gel fraction is preferably 1% or more and 80% or less, and more preferably 5% or more and 50% or less.

The heating temperature is preferably 140 to 250°C, and more preferably 150 to 250°C.

The heating time is, although not particularly limited, preferably 1 minute or longer and 5 hours or shorter, more preferably 2 minutes or longer and 2 hours or shorter, and even more preferably 5 minutes or longer and 1 hour or shorter.

Examples of the complex include a complex in which the curable composition is coated on a substrate and plural substrates are adhered to one another, and a complex in which the curable composition is coated to fill gaps in a substrate or between substrates. The former substrate corresponds to use as an adhesive agent, and the latter substrate corresponds to use as a sealing material.

The heating step is preferably a step for producing a complex by heating and curing the curable composition, and examples thereof include a heating and curing step for curing the curable composition and a heating, and curing step after coating a complex with a primer, a coating material, a sealer, a potting material, or a coating substance, and the like. Examples of the heating and curing step after coating with a coating material include a baking step after coating with a baking coating material, and a heating and drying step after electrodeposition application. From the viewpoint of fully exhibiting the effect of the present invention, the heating step is preferably a heating and curing step that is carried out after coating a complex with a primer, a coating material, a sealer, a potting material, a coating substance, and the like which is cured by heating, and it is more preferably a heating and curing step that is carried out after coating a complex with a coating material that is cured by heating. As for the method for curing, a conventionally well-known means such as hot air drying or infrared ray heating is used.

Specific examples of a method for producing a complex in which the heating step is a step of curing the curable composition include a method in which the curable composition is coated to fill gaps in a substrate or between substrates, and then cured at 140 to 250°C to cure the curable composition, and a method in which the curable composition is coated on one of several substrates or on several substrates, and several substrates are adhered to one another thereafter, and the substrates are heated at 140 to 250°C to cure the curable composition.

Furthermore, specific examples of the method for producing a complex in which the heating step is a heating and curing step for curing a coating material and the like coated on the complex, a method in which a complex having gaps in a substrate or between substrates filled with the curable composition, or a complex having several substrates adhered to one another by the curable composition is coated with a primer, a coating material, a sealer, a potting material, a coating substance, and the like followed by heating at 140 to 250°C to heat and cure the coating material and the like can be mentioned. Coating a coating material on a complex can be carried out after curing the curable composition, but it is also possibly carried out before curing of the curable composition, or when the surface is cured, or the curable composition can be cured together with the heating and curing step for heating and curing the coating material and the like. Examples of an application method to achieve curing by heating include baking application, electrodeposition application, and the like.

### <<Use>>

Examples of the use of the complex which can be produced by the method explained in the above include a car body and a member of an automobile, a car body and a member of large-size vehicle such as truck or bus, a car body and a member of a railway car, a member of airplane, a member of ship, a container, an electric and electronic member, a member of home appliances, various mechanical members, and constructional materials such as sash.

### EXAMPLES

Hereinbelow, specific explanations are given in view of examples of the method of the present invention, but the present invention is not limited by the examples.

The number average molecular weight and molecular weight distribution in Examples are GPC molecular weight and molecular weight distribution that are measured at the following conditions.
Liquid transport system: HLC-8220GPC, manufactured by Tosoh Corporation
Column: TSK-GEL H type, manufactured by Tosoh Corporation Solvent: THF
Molecular weight: polystyrene as reference
Measurement temperature: 40°C

The terminal group-based molecular weight in Examples is a molecular weight obtained by determining the hydroxyl value by the measurement method of JIS K 1557 and the iodine value by the measurement method of JIS K 0070, and determining in consideration of the structure of an organic polymer (branching degree determined by the polymerization initiator used).

### (Synthesis Example 1)

Propylene oxide was polymerized using polyoxypropylene triol having a number average molecular weight of about 3,000 as an initiator and zinc hexacyanocobaltate glyme complex as a catalyst to obtain polyoxypropylene (P-1), which has a hydroxyl group at the terminal, a number average molecular weight of 16400 (terminal group-based molecular weight 12200), and molecular weight distribution Mw/Mn = 1.31. A 28% methanol solution containing 1.2 molar equivalents of sodium methoxide relative to the hydroxyl group of the obtained hydroxyl group-terminal polyoxypropylene (P-1) was added. Methanol was removed by evaporation under reduced pressure, and thereafter, 1.5 molar equivalent of allyl chloride were additionally added relative to the hydroxyl group of the polymer (P-1) to convert the terminal hydroxyl group to an allyl group. Unreacted allyl chloride was removed by evaporation under reduced pressure. The obtained unpurified allyl group-terminal polyoxypropylene (100 parts by weight) was mixed and stirred with 300 parts by weight of n-hexane and 300 parts by weight of water. The water was then removed by centrifugation, and the obtained hexane solution was further added with water (300 parts by weight) followed by stirring. Water was removed again by centrifugation, and the hexane was removed by evaporation under reduced pressure. According to the above, polyoxypropylene polymer (Q-1), which has an allyl group at the terminal, was obtained. Platinum divinyldisiloxane complex solution (25 µl) was added to the polymer (Q-1) (500 g), and triethoxysilane (14.6 g) was slowly added dropwise thereto with stirring. After reaction at 90°C for 2 hours, unreacted triethoxysilane was evaporated under reduced pressure to obtain polyoxypropylene (A-1) having a triethoxysilyl group at the terminal and a number average molecular weight of about 16400. It was found that the polymer (A-1) has 2.2 triethoxysilyl groups on average in one molecule.

### (Synthesis Example 2)

To 500 g of the polyoxypropylene polymer (Q-1), which has an allyl group at the terminal as obtained from Synthesis Example 1, platinum divinyldisiloxane complex solution (25 µl) was added and dimethoxymethylsilane (8.9 g) was slowly added dropwise thereto with stirring. After reaction at 100°C for 2 hours, unreacted dimethoxymethylsilane was evaporated under reduced pressure to obtain polyoxypropylene (B-1) which has a dimethoxymethylsilyl group at the terminal and a number average molecular weight of about 16400. It was found that the polymer (B-1) has 2.1 dimethoxymethylsilyl groups on average in one molecule.

### (Synthesis Example 3)

Polyoxypropylene (A-1) having triethoxysilyl group (100 parts by weight) which has been obtained in Synthesis Example 1 was added with 15 parts by weight of methanol and 35% by weight aqueous hydrochloric acid solution (18 ppm) followed by reaction for 1 hour at 70°C. After that, epoxidized soybean oil (manufactured by New Japan Chemical Co., Ltd., SANSO CIZER E-2000H) were added (900 ppm) followed by stirring for 1 hour at 90°C. Under reduced pressure, methanol was evaporated from the obtained methanol solution to obtain polyoxypropylene (B-2) which has a trimethoxysilyl group at the terminal and number average molecular weight of about 16400. It was found that the polymer (B-2) has 2.2 trimethoxysilyl groups on average in one molecule.

### (Example 1)

To 100 parts by weight of the polymer (A-1), 3 parts by weight of IRGANOX 245 (manufactured by BASF Japan Ltd., hindered-phenol-based antioxidant), 50 parts by weight of PPG3000 (manufactured by Takeda Pharmaceutical Company Ltd., product name: Actcol P-23), 160 parts by weight of NEOLIGHT SP (manufactured by Takehara Kagaku Kogyo Co., Ltd., precipitating calcium carbonate), 54 parts by weight of LM2200 (manufactured by Maruo Calcium Co., Ltd., heavy calcium carbonate), 5 parts by weight of A-1100 (manufactured by Momentive: γ-aminopropyltriethoxysilane), and 2 parts by weight of U-220H (manufactured by Nitto Kasei Co., Ltd., dibutyl tin bisacetylacetonate) were added, and, after mixing them sufficiently by using a spatula, they were homogeneously mixed and defoamed by using a planetary mixer.

On an aluminum plate, the obtained curable composition was applied to a size of 20 mm × 120 mm × 2 mm (thickness). The curable composition applied on aluminum was aged for 20 minutes in an environment of 23°C/50% RH. Immediately thereafter, it was aged for 20 minutes in a dryer which has been adjusted to 100°C, 160°C, or 180°C. Immediately after completion of the aging, it was taken out and cooled for 10 minutes. The foaming state of a cured product after cooling was visually observed, and absence or presence of foaming was determined. A state in which no foaming like swelling is present on a surface of the blended product after curing and not even small foamings are present inside the blended product is expressed as good, a state in which slight foamings are present inside the blended product but no wrinkle or swelling is present on a surface of the blended product after curing is expressed as fair, and a state in which wrinkle or swelling is present on a surface of the blended product after curing is expressed as bad. The results are shown in Table 1.

### (Example 2)

Except that 3 parts by weight of A-1100 and 4 parts by weight of ethyl silicate 48 (manufactured by COLCOAT Co., Ltd.) are used instead of 5 parts by weight of A-1100, the same operations as Example 1 were carried out, and evaluation of the obtained cured product was carried out. The results are shown in Table 1.

### (Example 3)

The curable composition was prepared in the same manner as Example 1. On an aluminum plate, the obtained curable composition was applied to a size of 20 mm × 120 mm × 2 mm (thickness). The curable composition applied on aluminum was aged for 20 minutes in an environment of 23°C/50% RH, and an epoxy coating material was coated on top of the curable composition. Immediately after coating of the epoxy coating material, it was aged for 20 minutes in a dryer which has been adjusted to 100°C or 160°C. Immediately after completion of the aging, it was taken out and cooled for 10 minutes. The foaming state of a cured product in a complex after cooling was visually observed, and absence or presence of foaming was determined. With regard to the cured coating film in the complex, a state in which swelling derived from foaming of a cured product of the curable composition is absent and not even small foamings are present inside the cured product of the curable composition is expressed as O, a state in which slight foamings are present inside the cured product of the curable composition but no wrinkle or swelling is present on a surface of the coating film after curing is expressed as Δ, and a state in which wrinkle or swelling is present on a surface of the coating film after curing is expressed as X. As a result, the complex composed of a substrate formed of an aluminum plate, a cured product of the curable composition containing the component (A) which has a triethoxysilyl group as a hydrolyzable group, and a coating film of a heat-curable coating material showed the evaluation of O under heating at 100°C or heating at 160, and there was no problem such as swelling or foaming.

### (Comparative Example 1)

Except that the polymer (B-1) is used instead of the polymer (A-1) and A-1110 (manufactured by Momentive: γ-aminopropyltrimethoxysilane) is used instead of A-1100, the same operations as Example 1 were carried out and evaluation of the obtained cured product was carried out. The results are shown in Table 1.

### (Comparative Example 2)

The same operations as Example 1 were carried out except that the polymer (B-1) is used instead of the polymer (A-1), but curing has progressed during the production so that the curable composition was not obtained.

### (Comparative Example 3)

Except that the polymer (B-1) is used instead of the polymer (A-1) and 1 part by weight of U-220H is used instead of 2 parts by weight of U-220H, the same operations as Example 1 were carried out and evaluation of the obtained cured product was carried out. The results are shown in Table 1.

### (Comparative Example 4)

Except that the polymer (B-2) is used instead of the polymer (A-1), A-1110 (manufactured by Momentive: γ-aminopropyltrimethoxysilane) is used instead of A-1100, and 0.2 part by weight of U-100 (manufactured by Nitto Kasei Co., Ltd.: dibutyl tin dilaurate) is used instead of 2 parts by weight of U-220H, the same operations as Example 1 were carried out and evaluation of the obtained cured product was carried out. The results are shown in Table 1.

### (Comparative Example 5)

The curable composition was prepared in the same manner as Comparative Example 1. By using the obtained curable composition, evaluation was made in the same manner as Example 3, in terms of swelling after curing, for the complex composed of a substrate formed of an aluminum plate, a cured product of the curable composition, and a coating film of a heat-curable coating material. As a result, the evaluation was O for heating at 100°C, without any problem like swelling or foaming. However, for heating at 160°C, the evaluation was X, and due to the influence of foamings in the cured product of the curable composition, swelling has occurred also on the surface of the coating film. The evaluation of X for the case of heating 160°C is considered to be caused by blending of the polymer (B-1) having a trimethoxy group in the curable composition.

**[Table 1]**

| | | Example | | Comparative Example | | | |
|---|---|---|---|---|---|---|---|
| | | 1 | 2 | 1 | 2 | 3 | 4 |
| Polymer having hydrolyzable silyl group | A-1 | 100 | 100 | | | | |
| | B-1 | | | 100 | 100 | 100 | |
| | B-2 | | | | | | 100 |
| Antioxidant | IR245 | 3 | 3 | 3 | 3 | 3 | 3 |
| Plasticizing agent | PPG3000 | 50 | 50 | 50 | 50 | 50 | 50 |
| Filler | NEOLIGHT SP | 160 | 160 | 160 | 160 | 160 | 160 |
| | LM2200 | 54 | 54 | 54 | 54 | 54 | 54 |
| Adhesiveness imparting agent | A-1100 | 5 | 3 | | 5 | 5 | |
| | A-1110 | | | 5 | | | 5 |
| Dehydrating agent | Ethyl silicate 48 | | 4 | | | | |
| Curing catalyst | U-220H | 2 | 2 | 2 | 2 | 1 | |
| | U-100 | | | | | | 0.2 |
| Swelling state after heating | 100 °C x 20min. | Good | Good | Good | Impossible to prepare curable composition | Good | Good |
| | 160 °C x 20min. | Good | Fair | Bad | | Bad | Bad |
| | 180 °C x 20min. | Good | Fair | - | | - | - |

From Comparative Examples 1, 3, and 4 using the polymer (B-1) or (B-2) which has a trimethoxy group as a hydrolyzable group, surface swelling or wrinkle that is caused by vaporization and foaming of the contents after heating was confirmed. On the other hand, no surface swelling or wrinkle was confirmed from Examples 1 and 2 in which the polymer (A-1) having an ethoxy group is used.

## Claims

1. A method for producing a complex of a substrate, a cured product of a curable composition, and a coating film of a heat-curable coating material, the method comprising:
coating a substrate with a curable composition, and thereafter coating with a heat-curable coating material, and then carrying out heating, wherein the heating step is performed before curing of the curable composition; and
wherein the curable composition contains a polyoxyalkylene polymer (A) having a hydrolyzable silyl group, and
the hydrolyzable silyl group is represented by the following general formula (1):
-SiRₐ(OR¹)₃₋ₐ (1),
wherein each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2.

2. The method for producing a complex according to claim 1, wherein temperature for the heating is 140 to 250°C.

3. The method for producing a complex according to claim 2, wherein temperature for the heating is 150 to 250°C.

4. The method for producing a complex according to any one of claims 1 to 3, wherein the heating is carried out after coating the substrate with the curable composition but before the curable composition is cured.

5. The method for producing a complex according to any one of claims 1 to 4, wherein the R¹ is an ethyl group.

6. The method for producing a complex according to any one of claims 1 to 5, wherein a is 0.

7. The method for producing a complex according to any one of claims 1 to 6, wherein the curable composition further contains a silane coupling agent in which the hydrolyzable group is a methoxy group, and content of the silane coupling agent is 2 parts by weight or less relative to 100 parts by weight of the polyoxyalkylene polymer (A) having a hydrolyzable silyl group.

8. The method for producing a complex according to any one of claims 1 to 6, wherein the hydrolyzable silyl group of a compound having a hydrolyzable silyl group that is contained in the curable composition is only the hydrolyzable silyl group represented by the general formula (1).

9. The method for producing a complex according to any one of claims 1 to 8, wherein number of the silyl group contained in one molecule of the polyoxyalkylene polymer (A) having a hydrolyzable silyl group is 1.8 to 3.0.

10. A complex of a substrate, a cured product of a curable composition, and a coating film of a heat-curable coating material,
wherein the curable composition contains a polyoxyalkylene polymer (A) having a hydrolyzable silyl group, and
the hydrolyzable silyl group is represented by the following general formula (1):
-SiRₐ(OR¹)₃₋ₐ (1),
wherein each R independently represents a hydrocarbon group having 1 to 10 carbon atoms that may have a substituent group formed of a heteroatom-containing group or a halogen atom, each R¹ independently represents a hydrocarbon group having 2 to 10 carbon atoms, and a is 0, 1 or 2.

## Patentansprüche

1. Ein Verfahren zur Herstellung eines Komplexes aus einem Substrat, einem gehärteten Produkt aus einer härtbaren Zusammensetzung und einem Beschichtungsfilm aus einem wärmehärtbaren Beschichtungsmaterial, wobei das Verfahren umfasst:
Beschichten eines Substrats mit einer härtbaren Zusammensetzung und nachfolgendes Beschichten mit einem wärmehärtbaren Beschichtungsmaterial und dann Durchführen von Erwärmen, wobei der Erwärmungsschritt vor dem Härten der härtbaren Zusammensetzung durchgeführt wird; und
wobei die härtbare Zusammensetzung ein Polyoxyalkylenpolymer (A) mit einer hydrolysierbaren Silylgruppe enthält und
die hydrolysierbare Silylgruppe durch die folgende allgemeine Formel (1) dargestellt wird:
-SiRₐ(OR¹)₃₋ₐ (1),
wobei R jeweils unabhängig eine Kohlenwasserstoffgruppe mit 1 bis 10 Kohlenstoffatomen darstellt, die eine aus einer heteroatomhaltigen Gruppe oder einem Halogenatom gebildete Substituentengruppe aufweisen kann, R¹ jeweils unabhängig eine Kohlenwasserstoffgruppe mit 2 bis 10 Kohlenstoffatomen darstellt und a gleich 0, 1 oder 2 ist.

2. Das Verfahren zur Herstellung eines Komplexes gemäß Anspruch 1, wobei die Temperatur für das Erwärmen 140 bis 250°C beträgt.

3. Das Verfahren zur Herstellung eines Komplexes gemäß Anspruch 2, wobei die Temperatur für das Erwärmen 150 bis 250°C beträgt.

4. Das Verfahren zur Herstellung eines Komplexes gemäß einem der Ansprüche 1 bis 3, wobei das Erwärmen nach dem Beschichten des Substrats mit der härtbaren Zusammensetzung, aber vor dem Härten der härtbaren Zusammensetzung durchgeführt wird.

5. Das Verfahren zur Herstellung eines Komplexes gemäß einem der Ansprüche 1 bis 4, wobei R¹ eine Ethylgruppe ist.

6. Das Verfahren zur Herstellung eines Komplexes gemäß einem der Ansprüche 1 bis 5, wobei a gleich 0 ist.

7. Das Verfahren zur Herstellung eines Komplexes gemäß einem der Ansprüche 1 bis 6, wobei die härtbare Zusammensetzung ferner ein Silankupplungsmittel enthält, in dem die hydrolysierbare Gruppe eine Methoxygruppe ist und der Gehalt des Silankupplungsmittels 2 Gewichtsteile oder weniger, bezogen auf 100 Gewichtsteile des Polyoxyalkylenpolymers (A) mit einer hydrolysierbaren Silylgruppe, beträgt.

8. Das Verfahren zur Herstellung eines Komplexes gemäß einem der Ansprüche 1 bis 6, wobei es sich bei der hydrolysierbaren Silylgruppe einer, eine hydrolysierbare Silylgruppe aufweisenden Verbindung, die in der härtbaren Zusammensetzung enthalten ist, nur um die hydrolysierbare Silylgruppe, dargestellt durch die allgemeine Formel (1), handelt.

9. Das Verfahren zur Herstellung eines Komplexes gemäß einem der Ansprüche 1 bis 8, wobei die Anzahl der Silylgruppe, enthalten in einem Molekül des Polyoxyalkylenpolymers (A) mit einer hydrolysierbaren Silylgruppe, 1,8 bis 3,0 beträgt.

10. Ein Komplex aus einem Substrat, einem gehärteten Produkt aus einer härtbaren Zusammensetzung und einem Beschichtungsfilm aus einem wärmehärtbaren Beschichtungsmaterial,
wobei die härtbare Zusammensetzung ein Polyoxyalkylenpolymer (A) mit einer hydrolysierbaren Silylgruppe enthält und
die hydrolysierbare Silylgruppe durch die folgende allgemeine Formel (1) dargestellt wird:
-SiRₐ(OR¹)₃₋ₐ (1),
wobei R jeweils unabhängig eine Kohlenwasserstoffgruppe mit 1 bis 10 Kohlenstoffatomen darstellt, die eine aus einer heteroatomhaltigen Gruppe oder einem Halogenatom gebildete Substituentengruppe aufweisen kann, R¹ jeweils unabhängig eine Kohlenwasserstoffgruppe mit 2 bis 10 Kohlenstoffatomen darstellt und a gleich 0, 1 oder 2 ist.

## Revendications

1. Procédé de production d'un complexe d'un substrat, d'un produit durci d'une composition durcissable, et d'un film de revêtement d'un matériau de revêtement thermodurcissable, le procédé comprenant :
le revêtement d'un substrat avec une composition durcissable, et après cela le revêtement avec un matériau de revêtement thermodurcissable, et puis la réalisation d'un chauffage, dans lequel l'étape de chauffage est réalisée avant le durcissement de la composition durcissable ; et
dans lequel la composition durcissable contient un polymère de polyoxyalkylène (A) présentant un groupe silyle hydrolysable, et
le groupe silyle hydrolysable est représenté par la formule générale (1) suivante :
-SiRₐ(OR¹)₃₋ₐ (1),
dans laquelle chaque R représente indépendamment un groupe hydrocarboné ayant de 1 à 10 atomes de carbone qui peut présenter un groupe substituant formé d'un groupe contenant un hétéroatome ou d'un atome d'halogène, chaque R¹ représente indépendamment un groupe hydrocarboné ayant de 2 à 10 atomes de carbone, et a est égal à 0, 1 ou 2.

2. Procédé de production d'un complexe selon la revendication 1, dans lequel la température pour le chauffage est de 140 à 250°C.

3. Procédé de production d'un complexe selon la revendication 2, dans lequel la température pour le chauffage est de 150 à 250°C.

4. Procédé de production d'un complexe selon l'une quelconque des revendications 1 à 3, dans lequel le chauffage est réalisé après revêtement du substrat avec la composition durcissable mais avant que la composition durcissable soit durcie.

5. Procédé de production d'un complexe selon l'une quelconque des revendications 1 à 4, dans lequel le R¹ est un groupe éthyle.

6. Procédé de production d'un complexe selon l'une quelconque des revendications 1 à 5, dans lequel a est égal à 0.

7. Procédé de production d'un complexe selon l'une quelconque des revendications 1 à 6, dans lequel la composition durcissable contient de plus un agent de couplage de silane dans lequel le groupe hydrolysable est un groupe méthoxy, et la teneur de l'agent de couplage de silane est de 2 parties en masse ou inférieure par rapport à 100 parties en masse du polymère de polyoxyalkylène (A) présentant un groupe silyle hydrolysable.

8. Procédé de production d'un complexe selon l'une quelconque des revendications 1 à 6, dans lequel le groupe silyle hydrolysable d'un composé présentant un groupe silyle hydrolysable qui est contenu dans la composition durcissable est uniquement le groupe silyle hydrolysable représenté par la formule générale (1).

9. Procédé de production d'un complexe selon l'une quelconque des revendications 1 à 8, dans lequel le nombre du groupe silyle contenu dans une molécule du polymère de polyoxyalkylène (A) présentant un groupe silyle hydrolysable est de 1,8 à 3,0.

10. Complexe d'un substrat, d'un produit durci d'une composition durcissable, et d'un film de revêtement d'un matériau de revêtement thermodurcissable,
dans lequel la composition durcissable contient un polymère de polyoxyalkylène (A) présentant un groupe silyle hydrolysable, et
le groupe silyle hydrolysable est représenté par la formule générale (1) suivante :
-SiRₐ(OR¹)₃₋ₐ (1),
dans laquelle chaque R représente indépendamment un groupe hydrocarboné ayant de 1 à 10 atomes de carbone qui peut présenter un groupe substituant formé d'un groupe contenant un hétéroatome ou d'un atome d'halogène, chaque R¹ représente indépendamment un groupe hydrocarboné ayant de 2 à 10 atomes de carbone, et a est égal à 0, 1 ou 2.
